(19) **Europäisches Patentamt**
European Patent Office
Office européen des brevets

(11) **EP 2 053 792 B1**

(12) **EUROPÄISCHE PATENTSCHRIFT**

(45) Veröffentlichungstag und Bekanntmachung des Hinweises auf die Patenterteilung:
**01.09.2010  Patentblatt 2010/35**

(51) Int Cl.:
*H04L 12/40* (2006.01)     *H04B 3/54* (2006.01)
*H04L 25/00* (2006.01)

(21) Anmeldenummer: **07020647.9**

(22) Anmeldetag: **22.10.2007**

(54) **Busanschalteinheit zum Zwischenschalten in eine Zweileiter-Stromschleife sowie Messumformer, Stellungsregler und analoge Ein- und Ausgabebaugruppe mit einer solchen Busanschalteinheit**

Bus power-on unit for interconnecting in a dual conductor current loop and measuring transducer, positioner and analog input/output component with such a bus power-on unit

Unité de raccordement de bus destinée à l'intercalage dans une boucle de courant à deux conducteurs ainsi que convertisseur de mesure, positionneur et analogue, bloc d'entrée et de sortie doté d'une telle unité de raccordement de bus

(84) Benannte Vertragsstaaten:
**DE FR GB IT**

(43) Veröffentlichungstag der Anmeldung:
**29.04.2009  Patentblatt 2009/18**

(73) Patentinhaber: **SIEMENS AKTIENGESELLSCHAFT**
**80333 München (DE)**

(72) Erfinder: **Kort, Valentin**
**76829 Landau (DE)**

(56) Entgegenhaltungen:
**EP-A- 0 365 696     WO-A-92/13411**
**US-A- 4 888 764**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 053 792 B1

**Beschreibung**

Die Erfindung betrifft eine Busanschalteinheit zum Zwischenschalten in eine Zweileiter-Stromschleife, wobei die Busanschalteinheit einen Übertrager zum potentialfreien Auskoppeln eines mit digitalen Empfangsdaten modulierten Wechselstromsignals und/oder zum Einkoppeln eines mit digitalen Sendedaten zu modulierenden Wechselstromsignals aufweist. Das Wechselstromsignal ist einem Gleichstromsignal, dem so genannten "Normsignal" eines Zweileiter-Schleifenstroms, aufmoduliert bzw. aufmodulierbar. Die Busanschalteinheit weist eine sekundärseitig mit dem Übertrager verbundene bidirektionale Modemeinheit zur Ausgabe der Empfangsdaten auf einen Datenbus und zur Eingabe der Sendedaten von dem Datenbus auf.

Die Erfindung betrifft weiterhin einen Messumformer, einen Stellungsregler sowie eine analoge Eingabebaugruppe und eine analoge Ausgabebaugruppe, welche jeweils zumindest eine derartige Busanschalteinheit aufweisen.

Die Busanschalteinheit ist im einfachsten Fall eine Leiterplatte mit entsprechenden Ein- und Ausgängen zum Anschließen an die Zweileiter-Stromschleife und an einen Datenbus. Die Modemeinheit der Busanschalteinheit kann beispielsweise eine CAN-Busschnittstelle mit einem CAN-Bus-Transceiver, eine I2C-Schnittstelle oder ganz allgemein eine serielle oder parallele Schnittstelle aufweisen. Die Modemeinheit kann z. B. ein kompaktes integriertes elektronisches Bauelement sein.

Der Messumformer und der Stellungsregler werden typischerweise in der Anlagen- und Automatisierungstechnik, insbesondere in der chemischen Industrie, Petrochemie und im Untertagebau, eingesetzt. Die analoge Eingabebaugruppe sowie die analoge Ausgabebaugruppe sind insbesondere zum Einstecken in einen Leitstellenrechner oder Prozessrechner vorgesehen. Letztere können z. B. Personal Computer (PC) sein. Alternativ können die analogen Ein- und Ausgabebaugruppen Komponenten einer speicherprogrammierbaren Steuerung (SPS) sein. Sie können alternativ als dezentrale Ein- und/oder Ausgabebausteine zum Anbringen an einer Hutschiene ausgebildet sein.

Messumformer, wie z. B. vom Typ SITRANS P der Fa. Siemens, sowie Stellungsregler, wie z. B. vom Typ SIPART PS2 der Fa. Siemens, werden zur Übertragung eines Messwertes bzw. eines Sollwertes an einer Zweileiter-Stromschleife betrieben. Über dieselbe Zweileiter-Stromschleife werden ein derartiger Messumformer und Stellungsregler auch mit elektrischer Energie zur Speisung der elektronischen Schaltkreise versorgt. Die speisende Gegenstelle kann eine analoge Eingabebaugruppe bzw. eine analoge Ausgabebaugruppe eines Leitstellenrechners, eines Prozessrechners oder einer SPS sein.

Ein Stellungsregler ist üblicherweise ein Gerät zur Positionierung von Ventilen in der Automatisierungstechnik. Er wird vor allem in der Prozessindustrie eingesetzt, um die Produktionsabläufe zu kontrollieren. Der Stellungsregler kann einen Linearantrieb oder einen Rotationsantrieb aufweisen, um damit verbundene Anlagenkomponenten, wie Schieber, Bremselemente, Luftklappen und dergleichen, zu betätigen. Allgemein wandelt ein Stellungsregler ein elektrisches Eingangssignal in ein entsprechendes Ausgangssignal um. Des Weiteren verfügen alle Stellungsreglertypen über eine Stellungsrückmeldung, die dazu dient, die Ist-Position zu bestimmen.

Der Messwertbereich eines zu übertragenden Messwertes, wie z. B. einer Temperatur, einer Kraft, eines Druckwertes oder dergleichen, wird üblicherweise in einem zugeordneten Stromwertbereich der Zweileiter-Stromschleife von 4 mA bis 20 mA (4/20 mA-Standard) übertragen. Bei dem eingeprägten Strom handelt es sich um einen Gleichstrom. Der zu übertragende Messwertbereich wird dabei in einem Stromwertbereich von 16 mA abgebildet, so dass eine permanente Stromversorgung des Signalkreises des Messumformers und eines daran angeschlossenen Sensors bzw. eines Stellgliedes, wie z. B. eines Ventils, des Stellungsreglers möglich ist.

Das über die Zweileiter-Stromschleife übertragene Gleichstrom- bzw. Normsignal ist verhältnismäßig unempfindlich gegenüber elektromagnetischen Störungen. Die maximale Länge der Zweileiter-Stromschleife kann bei entsprechender Kompensation der Leitungsverluste, das heißt bei entsprechender Anhebung der Speisespannung, 1000 m und mehr betragen. In der Zweileiter-Stromschleife ist zumindest ein Messwiderstand im Bereich von 50 bis 250 Ohm geschaltet. Dieser wird bei dem Messumformer benötigt, um einen zum Messwert korrespondierenden Stromwert in die Zweileiter-Stromschleife mittels einer Regelschleife einzuprägen. Bei dem Stellungsregler wird dieser Messwiderstand benötigt, um den von der analogen Ausgabebaugruppe übertragenen Sollwert auslesen zu können. Entsprechendes gilt auch für eine analoge Eingabebaugruppe oder analoge Ausgabebaugruppe.

Das auf Basis der 4/20 mA-Zweileiter-Stromschleife standardisierte analoge Feldbussystem kann mittels einer so genannten HART®-Kommunikation (für Highway Addressable Remote Transducer) erweitert werden. HART® ist ein standardisiertes, weit verbreitetes Kommunikationssystem zum Aufbau industrieller digitaler Feldbusse. Es ermöglicht die digitale Kommunikation mehrerer Teilnehmer (Feldgeräte) über einen gemeinsamen digitalen Feldbus über die Zweileiter-Stromschleife entsprechend dem älteren 4/20 mA-Standard. Vorhandene Leitungen nach dem 4/20 mA-Standard können direkt benutzt und beide Systeme parallel betrieben werden.

Entsprechend dem HART®-Protokoll werden dem Normsignal, das heißt dem Gleichstromsignal des Zweileiter-Schleifenstroms, ein Wechselstromsignal mit einer Stromamplitude im Bereich von 0,8 mA bis 1 mA aufmoduliert. Die Modulation erfolgt mittels eines FSK-Verfahrens (FSK für Frequenz-Shift-Keying).

Dabei wird für die zu übertragende binäre 0/1-Folge eines Datenwortes entsprechend ihrem binären Wert eine Modulationsfrequenz von 2200 Hz für den Wert "0" und 1200 Hz für den Wert "1" verwendet. Um einen zuverlässigen Empfang zu gewährleisten, ist gemäß dem HART®-Protokoll ein Gesamtwiderstand der Zweileiter-Stromschleife inklusive des Leitungswiderstandes im Bereich zwischen 230 Ohm und 1100 Ohm spezifiziert.

Aufgrund der räumlichen Verteilung und unterschiedlicher Versorgung der Feldgeräte, wie z. B. der Messumformer und Stellungsregler, ist häufig eine Potentialtrennung zwischen der Zweileiter-Stromschleife und der Datenbusseite der Busanschalteinheit erforderlich. Dadurch werden mögliche negative Einflüsse auf die Datenübertragung, wie z. B. induktiv einkoppelnde Erdschleifen oder EMV-Einkopplungen in die Stromschleife, vermieden.

Üblicherweise wird zur Potentialtrennung ein Übertrager verwendet. In technischer Hinsicht handelt es sich um einen Transformator mit einer oder mehreren primär- und sekundärseitigen Wicklungen. Dabei fließt permanent der Schleifenstrom mit seinem überwiegenden Gleichstromanteil im Bereich von 4 mA bis 16 mA durch die Primärwicklung und magnetisiert den Kern des Übertragers. Der Übertragerkern ist somit hinsichtlich seines signaltechnischen Übertragungsverhaltens auf den maximalen Schleifenstrom auszulegen. Entsprechend groß ist der Übertrager in seinen äußeren Abmessungen im Vergleich zur integrierten Modemeinheit.

Es ist somit eine Aufgabe der Erfindung, eine kompaktere Busanschalteinheit anzugeben.

Es ist eine weitere Aufgabe der Erfindung, einen geeigneten Messumformer und Stellungsregler sowie eine geeignete analoge Eingabebaugruppe und eine analoge Ausgabebaugruppe anzugeben.

Die Aufgabe der Erfindung wird durch eine Busanschalteinheit mit den Merkmalen des Patentanspruchs 1 gelöst. In den abhängigen Ansprüchen 2 bis 8 sind vorteilhafte Ausführungsformen der Busanschalteinheit genannt. Im Anspruch 9 ist ein geeigneter Messumformer und im Anspruch 10 ein geeigneter Stellungsregler angegeben. Im Anspruch 11 ist eine geeignete analoge Eingabebaugruppe und im Anspruch 12 eine geeignete analoge Ausgabebaugruppe für einen Leitstellenrechner genannt.

Erfindungsgemäß weist der Übertrager zumindest zwei Primärwicklungen auf, welche derart untereinander verschaltet sind, dass sich die vom hindurchfließenden Zweileiter-Schleifenstrom im Übertrager erzeugten Magnetfelder gegenseitig aufheben. Es ist zumindest einer der Primärwicklungen ein Tiefpassfilter und/oder ein Hochpassfilter für das Wechselstromsignal vorgeschaltet.

Die Verschaltung der Primärwicklung erfolgt im Sinne einer bifilaren Wicklung, bei welcher sich die erzeugten Magnetfelder gegenseitig aufheben. Der Übertrager weist vorzugsweise zwei Primärwicklungen und vorzugsweise eine Sekundärwicklung auf. Dadurch erfolgt keine Magnetisierung des Übertragerkerns durch den betragsmäßig viel größeren Gleichstromanteil des Schleifenstroms. Das Tiefpassfilter und/oder das Hochpassfilter bewirken, dass der Wechselstromanteil des Schleifenstroms hauptsächlich nur durch eine der Primärwicklungen hindurchfließt. Der Übertragerkern muss hinsichtlich der Magnetisierung nur für den Wechselstromanteil und nicht für den Gleichstromanteil des Schleifenstroms ausgelegt werden. Es kann zur Signalübertragung folglich ein in seinen Abmessungen erheblich kleinerer Übertragerkern verwendet werden.

Der große Vorteil ist, dass die erfindungsgemäße Busanschalteinheit mit einem derartigen Übertrager und Filter erheblich kompaktere Abmessungen aufweist.

Die Größe des Übertragerkerns richtet sich nach der erzeugten maximalen erlaubten magnetischen Flussdichte $B_{MAX}$. Für darüber hinausgehende Schleifenströme geht dann der Übertragerkern in die magnetische Sättigung, bei der dann keine wesentliche Signalübertragung von der Primärseite zur Sekundärseite und in umgekehrter Richtung mehr möglich ist.

Die magnetische Flussdichte $B_{MAX}$ kann nach der Formel

$$B_{MAX} = (L \times \hat{I}) / (N \times A_{MIN})$$

berechnet werden, wobei L die Induktivität, $\hat{I}$ den Spitzenstrom, N die Windungszahl und $A_{MIN}$ den minimalen Kernquerschnitt bezeichnen.

Aus der Formel ist ersichtlich, dass die magnetische Flussdichte $B_{MAX}$ proportional zum Spitzenstrom $\hat{I}$ ist. Durch den stromkompensierten Aufbau und durch die Wicklungsbeschaltung reduziert sich der Spitzenstrom $\hat{I}$ in Höhe von 20,8 mA (= 20 mA Gleichstromanteil + 0,8 mA Wechselstromanteil des Schleifenstroms) auf 0,8 mA. Das Verhältnis der zulässigen Spitzenströme $\hat{I}$ zueinander beträgt 26. Da das Volumen eines Übertragers oder eines Transformators im Allgemeinen proportional zum Quadrat des Kernquerschnitts $A_{MIN}$ ist, kann der Übertrager in seinen Abmessungen prinzipiell 676 = $26^2$ mal kleiner sein. In der Praxis wird die Volumenreduktion insbesondere durch den sich dabei nicht ändernden Leiterquerschnitt der Primär- und Sekundärwicklungen deutlich darunter liegen. Dennoch hat die Volumenreduktion, die im ein- bis zweistelligen Bereich liegen wird, vorteilhaft eine erhebliche Platz-, Gewichts- und Kostenersparnis für die Busanschalteinheit zur Folge.

Nach einer bevorzugten Ausführungsform ist das Tiefpassfilter eine Drossel. Die Drossel ist vorzugsweise auf die "HART®"-Frequenzen im Bereich von 1200 Hz bis 2200 Hz ausgelegt, das heißt, sie ist für diese Frequenzen im Vergleich zur Frequenz 0 Hz des Gleichstromsignals des Schleifenstroms hochohmig und somit sperrend. Vorzugsweise weist sie einen Ferritkern, wie z. B. einen Ringkern, auf, der mit einer Drahtwicklung umwickelt ist.

Nach einer alternativen Ausführungsform ist den zumindest zwei Primärwicklungen jeweils ein Widerstand vorgeschaltet. Es ist parallel zu einem der Widerstände ein Kondensator bzw. eine Kapazität geschaltet, welcher mit dem parallel geschalteten Widerstand das Hochpassfilter bildet. Die beiden Widerstände weisen typischerweise einen gleichen Ohmwert auf. Für den betrachteten Fall, dass noch kein Kondensator vorhanden ist, erfolgt prinzipiell keine Magnetisierung des Übertragerkerns, weder durch den Gleichstromanteil noch durch den Wechselstromanteil des Schleifenstroms. Die in den Primärwicklungen erzeugten Magnetfelder heben sich gegenseitig auf. Erst die Parallelschaltung eines Kondensators parallel zu einem der Widerstände bewirkt, dass zumindest ein Teil des Wechselstromsignals entsprechend einem Hochpass diesen Widerstand parallel passieren kann. Insbesondere beträgt die Impedanz der beiden Widerstände ein Vielfaches der Impedanz des Kondensators.

Vorzugsweise weist das Wechselstromsignal nach einer weiteren Ausführungsform eine Stromamplitude von max. 1 mA, insbesondere von ca. 0,8 mA, auf. Im Besonderen weist das Wechselstromsignal eine FSK-Frequenz von 1200 Hz oder 2200 Hz entsprechend dem binären Wert der seriellen Folge der digitalen Empfangs- oder Sendedaten auf. Nach einer bevorzugten Ausführungsform basiert die bidirektionale Datenübertragung auf einem Protokoll eines HART-Standards.

Nach einer weiteren Ausführungsform ist die Zweileiter-Stromschleife zur Übertragung eines Messwertes oder eines Sollwertes vorgesehen, dessen jeweiliger Messwertbereich durch korrespondierende eingeprägte Gleichstromwerte des Schleifenstroms in einem Bereich von 4 mA bis 20 mA abbildbar ist.

Die Aufgabe der Erfindung wird weiterhin durch einen Messumformer gelöst. Er ist zum Anschließen an eine Zweileiter-Stromschleife mit einem Messwerteingang für einen über die Zweileiter-Stromschleife zu übertragenden Messwert vorgesehen. Der Messumformer weist einen Stromregler zum Einprägen von zum Messwert korrespondierenden Gleichstromwerten des Schleifenstroms in die Zweileiter-Stromschleife auf. Gemäß der Erfindung weist der Messumformer zumindest eine in Reihe zum Stromregler geschaltete derartige Busanschalteinheit auf. Insbesondere ist diese mit einem Datenbus des Messumformers verbindbar. Durch die Integration der erfindungsgemäßen Busanschalteinheit in den Messumformer lässt sich dessen Baugröße deutlich verkleinern. Vorzugsweise sind der Stromregler zur herkömmlichen analogen Ausgabe des Messwertes und die erfindungsgemäße Busanschalteinheit auf einer gemeinsamen Leiterplatte angeordnet. Typischerweise ist eine übergeordnete Steuereinheit des Messumformers über einen Datenbus, wie z. B. über den Datenbus eines Mikrocontrollers als Steuereinheit, mit der Busanschalteinheit zum Datenaustausch, wie z. B. von Diagnose- oder Konfigurationsdaten, verbunden.

In entsprechender Weise wird die Aufgabe durch einen Stellungsregler zum Anschließen an eine Zweileiter-Stromschleife und mit einem Sollwertausgang zur Ausgabe eines über die Zweileiter-Stromschleife in Form eines Stromwertes abgebildeten Sollwertes gelöst. Der Stellungsregler weist eine in Reihe zur Zweileiter-Stromschleife geschaltete Strommess-/Energieauskoppeleinheit zur Messung von Gleichstromwerten des Schleifenstroms sowie zur Energieversorgung eines Stellgliedes des Stellungsreglers auf. Erfindungsgemäß weist der Stellungsregler zumindest eine in Reihe zur Strommess-/Energieauskoppeleinheit geschaltete derartige Busanschalteinheit auf. Letztere ist insbesondere mit einem Datenbus des Stellungsreglers verbunden. Typischerweise ist wiederum z. B. eine übergeordnete Steuereinheit über den Datenbus zum Datenaustausch mit der Busanschalteinheit verbunden.

Die Aufgabe wird weiterhin durch eine analoge Eingabebaugruppe für einen Leitstellenrechner gelöst, welche eine Strommesserfassungseinheit zur Erfassung eines über eine Zweileiter-Stromschleife übertragenen Messwertes aufweist. Erfindungsgemäß weist die analoge Eingabebaugruppe zumindest eine in Reihe zur Strommesserfassungseinheit geschaltete derartige Busanschalteinheit auf. Insbesondere ist diese mit dem Datenbus des Leitstellenrechners verbindbar. Die analoge Eingabebaugruppe kann beispielsweise eine Steckkarte sein, welche in einen entsprechenden Slot des Leitstellenrechners eingesteckt werden kann. Alternativ kann die Eingabebaugruppe eine modulare dezentrale Eingabebaueinheit zur Montage an einer Hutschiene sein.

Schließlich wird die Aufgabe durch eine analoge Ausgabebaugruppe für einen Leitstellenrechner gelöst, welche eine regelbare Stromquelle zum Einprägen eines über eine Zweileiter-Stromschleife zu übertragenden Sollwertes aufweist. Erfindungsgemäß weist die analoge Ausgabebaugruppe zumindest eine in Reihe zur regelbaren Stromquelle geschaltete derartige Busanschalteinheit auf. Insbesondere ist diese mit dem Datenbus des Leitstellenrechners entsprechend der vorangegangenen Ausführungsform verbindbar.

Darüber hinaus können eine erfindungsgemäße analoge Eingabebaugruppe und eine analoge Ausgabebaugruppe eine gemeinsame analoge Ein-/Ausgabebaugruppe bzw. einen gemeinsamen modularen dezentralen Ein-/Ausgabebaustein bilden.

Die Erfindung sowie vorteilhafte Ausführungen der Erfindung werden im Weiteren anhand der nachfolgenden Figuren näher beschrieben. Es zeigen:

FIG 1   beispielhaft ein Leitsystem mit einem Leitstellen- rechner und einem daran angeschlossenen erfindungs- gemäßen Messumformer und Stellungsregler sowie zwei erfindungsgemäße Busanschalteinheiten und eine ana- loge Eingabebaugruppe und Ausgabebaugruppe,

FIG 2    beispielhaft einen zeitlichen Verlauf eines durch ein Wechselstromsignal überlagerten analogen Gleichstromsignals eines Zweileiter-Schleifen- stroms,

FIG 3    ein Prinzipschaltbild einer Busanschalteinheit nach dem Stand der Technik,

FIG 4    ein Prinzipschaltbild einer erfindungsgemäßen Bus- anschalteinheit gemäß einer ersten Ausführungsform und

FIG 5    ein Prinzipschaltbild einer erfindungsgemäßen Bus- anschalteinheit gemäß einer zweiten Ausführungs- form.

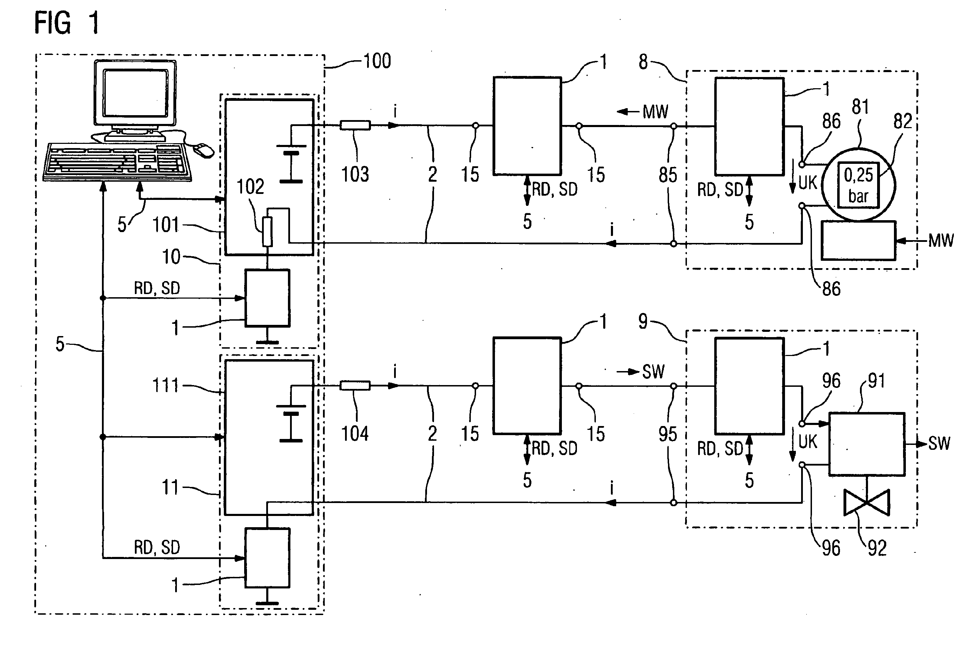

FIG 1 zeigt beispielhaft ein Leitsystem mit einem Leitstellenrechner 100 und einem daran angeschlossenen erfindungsgemäßen Messumformer 8 und Stellungsregler 9 sowie zwei erfindungsgemäße Busanschalteinheiten 1 und eine analoge Eingabebaugruppe. 10 und Ausgabebaugruppe 11.

Im linken Teil der FIG 1 ist der Leitstellenrechner 100 dargestellt. Dieser kann z. B. wie gezeigt ein Personal Computer sein. Alternativ kann anstelle eines Leitstellenrechners 100 ein Prozessrechner oder eine speicherprogrammierbare Steuerung (SPS) die leittechnische Zentrale des Leitsystems sein.

Der gezeigte Leitstellenrechner 100 weist beispielhaft eine erfindungsgemäße analoge Eingabebaugruppe 10 sowie eine erfindungsgemäße analoge Ausgabebaugruppe 11 auf. Die analoge Eingabebaugruppe 10 weist eine Strommess-/Energieversorgungseinheit 101 zur Erfassung eines über die gezeigte obere Zweileiter-Stromschleife 2 übertragenen Messwertes MW und zur Energieversorgung eines angeschlossenen Messumformers 8 auf. Der Messwertbereich des Messwertes MW ist durch korrespondierende eingeprägte Gleichstromwerte des Schleifenstroms i in einem Bereich von 4 mA bis 20 mA abgebildet. Weiterhin weist die analoge Eingabebaugruppe 10 eine in Reihe zur Strommess-/Energieversorgungseinheit 101 geschaltete erfindungsgemäße Busanschalteinheit 1 auf. Zur Energieversorgung weist die Strommess-/Energieversorgungseinheit 101 eine mit dem Batteriesymbol dargestellte Stromquelle und zur Strommessung einen Messwiderstand 102 auf. Mit dem Bezugszeichen 103 ist der Leitungswiderstand der Zweileiter-Stromschleife 2 bezeichnet.

Weiterhin ist die erfindungsgemäße Busanschalteinheit 1 mit dem Datenbus 5 des Leitstellenrechners 100 verbindbar. Über diesen können Sende- und Empfangsdaten SD, RD, welche z. B. Diagnose- oder Konfigurationsdaten aufweisen können, mit dem Leitstellenrechner 100, das heißt mit einer entsprechenden prozessorgestützten Steuereinheit, ausgetauscht werden.

Im mittleren oberen Bereich der FIG 1 ist eine weitere erfindungsgemäße Busanschalteinheit 1 gezeigt, welche in die Zweileiter-Stromschleife 2 geschaltet ist. Mit dem Bezugszeichen 15 sind elektrische Anschlüsse der Busanschalteinheit 1 bezeichnet. Die Busanschalteinheit 1 kann an einen Datenbus 5 einer nicht weiter gezeigten Gegenstelle angeschlossen werden.

Im rechten oberen Teil der FIG 1 ist ein erfindungsgemäßer Messumformer 8 dargestellt, durch den der von der analogen Eingabebaugruppe 10 bereitgestellte Schleifenstrom i hineinfließt und der dann wieder zur analogen Eingabebaugruppe 10 zurückfließt.

Der Messumformer 8 weist zum Anschließen an die Zweileiter-Stromschleife 2 einen Messwerteingang 85 für einen über die Zweileiter-Stromschleife 2 zu übertragenden Messwert MW auf. Er weist zudem einen Stromregler 81 zum Einprägen von zum Messwert MW korrespondierenden Gleichstromwerten des Schleifenstroms i in die Zweileiter-Stromschleife 2 auf. Der Stromregler 81 weist beispielsweise eine Anzeigeeinheit 82 auf, welche einen Druckwert in einer Höhe von 0,25 bar anzeigt.

Mit UK ist eine Klemmenspannung bezeichnet, welche zur Speisung am Messumformer 8 anliegt. Die minimale Klemmenspannung liegt typischerweise im Bereich von ca. 7 bis 10 V, während der Spannungsabfall über die erfindungsgemäße Busanschalteinheit 1 vergleichsweise klein und daher nicht eingezeichnet ist. Mit dem Bezugszeichen 86 sind interne Anschlüsse bezeichnet, über welche der "herkömmliche" Stromregler 81 des Messumformers 8 an die erfindungsgemäße Busanschalteinheit 1 angeschlossen ist. Die Busanschalteinheit 1 kann weiterhin mit einem Datenbus 5 des Messumformers 8 bzw. einer Steuereinheit des Messumformers 8 zum Datenaustausch verbunden sein.

Im linken unteren Teil der FIG 1 ist eine erfindungsgemäße analoge Ausgabebaugruppe 11 dargestellt. Sie weist eine regelbare Stromquelle 111 zum Einprägen eines über eine Zweileiter-Stromschleife 2 zu übertragenden Sollwertes SW und zur Energieversorgung eines angeschlossenen Stellungsreglers 9 auf. Sie weist weiterhin eine in Reihe zur regelbaren Stromquelle 111 geschaltete erfindungsgemäße Busanschalteinheit 1 auf. Zur Energieversorgung weist die regelbare Stromquelle 111 eine mit dem Batteriesymbol dargestellte Stromquelle auf. Mit dem Bezugszeichen 104 ist der Leitungswiderstand der unteren Zweileiter-Stromschleife 2 bezeichnet. Weiterhin ist die erfindungsgemäße Busanschalteinheit 1 mit dem Datenbus 5 des Leitstellenrechners 100 verbindbar bzw. verbunden. Über diesen können gleichfalls Sende- und Empfangsdaten SD, RD mit dem Leitstellenrechner 100 ausgetauscht werden.

Im rechten unteren Teil der FIG 1 ist ein erfindungsgemäßer Stellungsregler 9 dargestellt, durch den der von der analogen Ausgabebaugruppe 11 bereitgestellte Schleifenstrom i hineinfließt und der dann wieder zur analogen Ausgabebaugruppe 11 zurückfließt.

Der Stellungsregler 9 weist elektrische Anschlüsse 95 zum Anschließen an die Zweileiter-Stromschleife 2 auf. Er weist zudem einen Sollwertausgang zur Ausgabe eines über die Zweileiter-Stromschleife 2

in Form eines Stromwertes abgebildeten Sollwertes SW auf. Der Stellungsregler weist weiterhin eine in Reihe zur Zweileiter-Stromschleife 2 geschaltete Strommess-/Energieauskoppeleinheit 91 auf. Sie dient zur Messung von Gleichstromwerten des Schleifenstroms i in der Zweileiter-Stromschleife 2 und zur Energieversorgung eines Stellgliedes 92 des Stellungsreglers 9. Im Beispiel der FIG 1 ist das Stellglied 92 ein Ventil. Es ist in Reihe zur Strommess-/Energieauskoppeleinheit 91 eine erfindungsgemäße Busanschalteinheit 1 geschaltet. Mit dem Bezugszeichen 96 sind die dazugehörigen internen Anschlüsse bezeichnet. Mit UK ist wiederum die Klemmenspannung bezeichnet, welche zur Spannungs- bzw. Energieversorgung des Stellungsreglers 9 dient. Über den Datenbus 5 kann die Busanschalteinheit 1 Empfangs- und Sendedaten RD, SD insbesondere mit einer Steuereinheit des Stellungsreglers 9 austauschen.

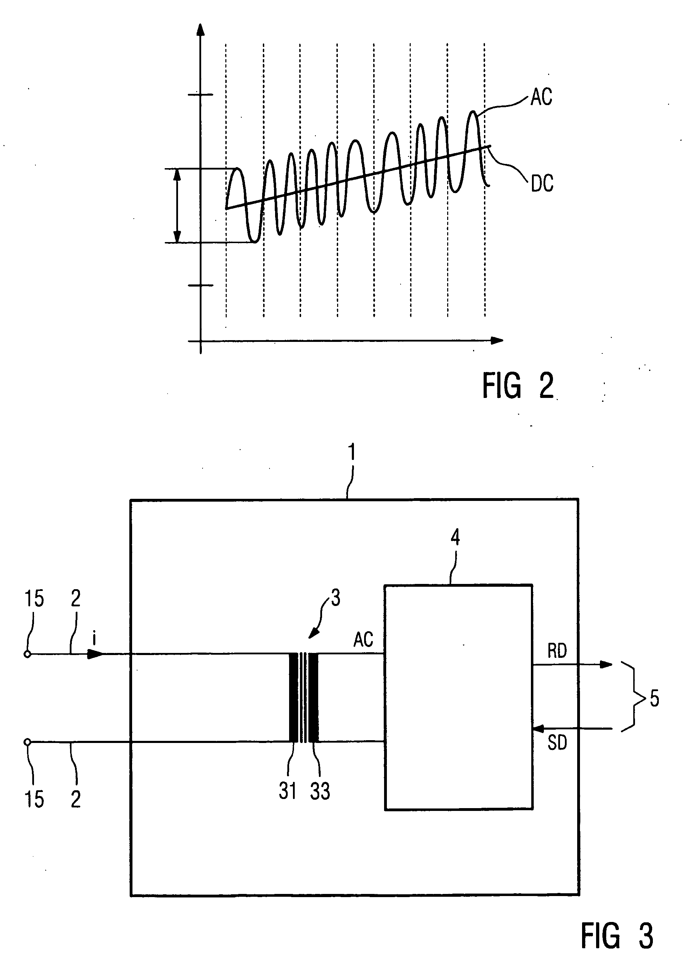

FIG 2 zeigt beispielhaft einen zeitlichen Verlauf eines durch ein Wechselstromsignal AC überlagerten analogen Gleichstromsignals DC eines Zweileiter-Schleifenstroms i. Die Stromamplitude des Wechselstromsignals AC beträgt beispielhaft 0,8 mA. Das Wechselstromsignal AC ist dabei im Vergleich zu dem Stromwertebereich von 4 mA bis 20 mA des Gleichstromsignals DC zur Veranschaulichung deutlich überhöht dargestellt. FIG 2 zeigt weiterhin die 1200 Hz- bzw. 2200 Hz-Wellenzüge, welche zur Kodierung eines binären "0"- oder "1"-Wertes verwendet werden. Im vorliegenden Beispiel wird die Bitfolge 1001101 eines Datenwortes übertragen.

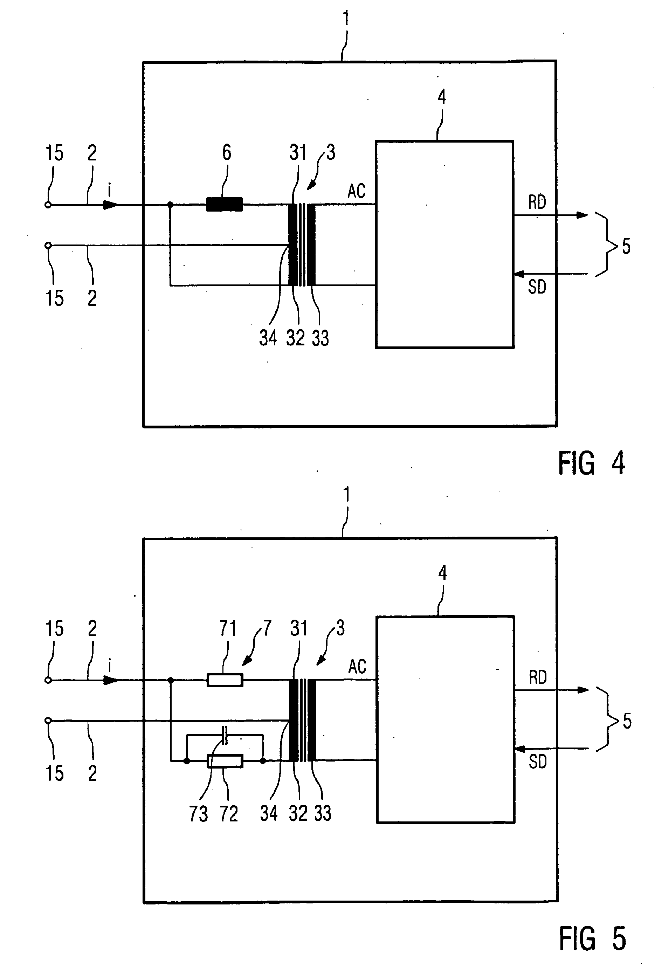

FIG 3 zeigt ein Prinzipschaltbild einer Busanschalteinheit 1 nach dem Stand der Technik. Im linken Teil der Busanschalteinheit 1 ist ein Übertrager 3 mit einer Primärwicklung 31 und einer Sekundärwicklung 33 zur Potentialtrennung dargestellt. Dem Übertrager 3 ist sekundärseitig eine bidirektionale Modemeinheit 4 nachgeschaltet, der gemäß dem Induktionsgesetz nur der Wechselanteil des Schleifenstroms i, das heißt das Wechselstromsignal AC, zugeführt wird bzw. welches in umgekehrter Richtung von der Modemeinheit 4 zur Übertragung in die Zweileiter-Schleife 2 erzeugt wird. Im rechten Teil der FIG 4 können die über die Zweileiter-Schleife 2 ausgekoppelten Empfangsdaten RD an einen Datenbus 5 ausgegeben werden. In umgekehrter Weise können vom Datenbus 5 stammende digitale Sendedaten SD von der Modemeinheit 4 eingelesen werden.

FIG 4 zeigt ein Prinzipschaltbild einer erfindungsgemäßen Busanschalteinheit 1 gemäß einer ersten Ausführungsform.

Erfindungsgemäß weist der Übertrager 3 zumindest zwei Primärwicklungen 31, 32 auf, welche derart untereinander verschaltet sind, dass sich die vom hindurchfließenden Zweileiter-Schleifenstrom i im Übertrager 3 erzeugten Magnetfelder gegenseitig aufheben. Es ist einer der Primärwicklungen 31, 32 ein Tiefpassfilter 6 in Form einer Drossel vorgeschaltet. Im Beispiel der FIG 4 sind zwei Primärwicklungen 31, 32 vorhanden.

Wesentlich ist, dass das Tiefpassfilter 6 das Wechselstromsignal AC bei einer der Primärwicklungen 31, 32 derart bedämpft oder unterdrückt, dass das Wechselstromsignal AC bei den anderen Primärwicklungen 32, 31 im Wesentlichen ungedämpft hindurchfließen und somit eine korrespondierende Wechselspannung in der Sekundärwicklung 33 induzieren kann.

Im Beispiel der FIG 4 sind die beiden Primärwicklungen 31, 32 in Reihe geschaltet. Mit dem Bezugszeichen 34 ist der dadurch entstehende Mittelabgriff bezeichnet. Über diesen fließt der gesamte Schleifenstrom i zurück, während der Schleifenstrom i über die jeweiligen verbleibenden Anschlüsse der Primärwicklungen 31, 32 mit einem in etwa halben Stromwert hineinfließt. Die beiden Primärwicklungen 31, 32 weisen einen derartigen Wicklungssinn auf, dass sich bei der gezeigten Beschaltung die erzeugten Magnetfelder zumindest zum Großteil gegenseitig aufheben.

Das Wechselstromsignal AC weist vorzugsweise eine Stromamplitude im Bereich von ca. 0,8 mA bis 1 mA auf. Es weist vorzugsweise zudem eine FSK-Frequenz von 1200 Hz oder 2200 Hz entsprechend dem binären Wert der digitalen Empfangs- oder Sendedaten RD, SD auf. Die bidirektionale Übertragung der Empfangs- und Sendedaten RD, SD basiert vorzugsweise auf dem Protokoll eines HART®-Standards.

Die Drossel 6 ist für das vergleichsweise hochfrequente Wechselstromsignal AC hochohmig. Sie sperrt bzw. bedämpft dieses so stark, dass im Wesentlichen nur noch das Gleichstromsignal DC durch die hier eine Primärwicklung 31 hindurchfließt. Die Drossel 6 ist somit für das Gleichstromsignal DC mit seiner Frequenz von 0 Hz quasi ein Kurzschluss und folglich sehr niederohmig.

FIG 5 zeigt ein Prinzipschaltbild einer erfindungsgemäßen Busanschalteinheit 1 gemäß einer zweiten Ausführungsform.

In diesem Fall ist den beiden Primärwicklungen 31, 32 jeweils ein Widerstand 71, 72 vorgeschaltet. Es ist parallel zu einem der beiden Widerstände 72 ein Kondensator 73 geschaltet, welcher mit dem parallel geschalteten Widerstand 72 das Hochpassfilter 7 bildet. Die beiden Widerstände 71, 72 weisen vorzugsweise einen gleichen Widerstandswert auf. Über beide Widerstände 71, 72 fällt unter der Voraussetzung, dass die beiden Primärwicklungen 31, 32 im Wesentlichen gleich ausgeführt sind, eine in etwa gleiche Spannung ab. Der parallel zu einem der Widerstände 72 geschaltete Kondensator 73 wirkt für die hochfrequenten "HART®"-Frequenzen wie ein Kurzschluss. Mit anderen Worten wird über diesen Kondensator 73 ein zusätzlicher Wechselstromanteil am Widerstand 72 vorbeigeführt, während die anderen Wechselstromanteile durch die beiden Widerstände 71, 72 sich in ihrer Wirkung im Übertrager 3 gegenseitig aufheben. Das über den Kondensator 73 geführte Wechselstromsignal AC bewirkt letztendlich die Induktion einer korrespondierenden Wechselspannung auf der Sekundärseite des Übertragers 3. Vorzugsweise beträgt die Impedanz der beiden Widerstände 71, 72 ein Vielfaches der Impedanz des Kondensators 73.

Es ist auch eine nicht weiter dargestellte Kombination von Hoch- und Tiefpassfiltern 7, 6 möglich, welche letztendlich bewirken, dass im Wesentlichen nur der Wechselstromanteil AC des Schleifenstroms i den Übertragerkern magnetisiert. Die Filter 6, 7 können Filter 1. Ordnung oder höherer Ordnung sein.

**Patentansprüche**

1. Busanschalteinheit zum Zwischenschalten in eine Zweileiter-Stromschleife (2), wobei die Busanschalteinheit einen Übertrager (3) zum potentialfreien Auskoppeln eines mit digitalen Empfangsdaten (RD) modulierten Wechselstromsignals (AC) und/oder zum Einkoppeln eines mit digitalen Sendedaten (SD) zu modulierenden Wechselstromsignals (AC) aufweist, wobei das Wechselstromsignal (AC) einem Gleichstromsignal (DC) eines Zweileiter-Schleifenstroms (i) aufmoduliert bzw. aufmodulierbar ist und wobei die Busanschalteinheit eine sekundärseitig mit dem Übertrager (3) verbundene bidirektionale Modemeinheit (4) zur Ausgabe der Empfangsdaten (RD) auf einen Datenbus (5) und zur Eingabe der Sendedaten (SD) von dem Datenbus (5) aufweist, **dadurch gekennzeichnet,**

   - **dass** der Übertrager (3) zumindest zwei Primärwicklungen (31, 32) aufweist, welche derart untereinander verschaltet sind, dass sich die vom hindurchfließenden Zweileiter-Schleifenstrom (i) im Übertrager (3) erzeugten Magnetfelder gegenseitig aufheben und
   - **dass** zumindest einer der Primärwicklungen (31, 32) ein Tiefpassfilter (6) und/oder ein Hochpassfilter (7) für das Wechselstromsignal (AC) vorgeschaltet ist.

2. Busanschalteinheit nach Anspruch 1, **dadurch gekennzeichnet,** **dass** das Tiefpassfilter (6) eine Drossel ist.

3. Busanschalteinheit nach Anspruch 1, **dadurch gekennzeichnet,** **dass** den zumindest zwei Primärwicklungen (31, 32) jeweils ein Widerstand (71, 72) vorgeschaltet ist und dass parallel zu einem der Widerstände (72) ein Kondensator (73) geschaltet ist, welcher mit dem parallel geschalteten Widerstand (72) das Hochpassfilter (7) bildet.

4. Busanschalteinheit nach Anspruch 3, **dadurch gekennzeichnet,** **dass** die Impedanz der beiden Widerstände (71, 72) ein Vielfaches der Impedanz des Kondensators (73) beträgt.

5. Busanschalteinheit nach einem der vorangegangenen Ansprüche, **dadurch gekennzeichnet,** **dass** das Wechselstromsignal (AC) eine Stromamplitude von max. 1 mA, insbesondere von ca. 0,8 mA, aufweist.

6. Busanschalteinheit nach einem der vorangegangenen Ansprüche, **dadurch gekennzeichnet,** **dass** das Wechselstromsignal (AC) eine FSK-Frequenz von 1200 Hz oder 2200 Hz entsprechend dem dualen Wert der digitalen Empfangs- oder Sendedaten (RD, SD) aufweist.

7. Busanschalteinheit nach Anspruch 5 oder 6, **dadurch gekennzeichnet,** **dass** die bidirektionale Datenübertragung auf einem Protokoll eines HART-Standards basiert.

8. Busanschalteinheit nach einem der vorangegangenen Ansprüche, **dadurch gekennzeichnet,** **dass** die Zweileiter-Stromschleife (2) zur Übertragung eines Messwertes (MW) oder eines Sollwertes (SW) vorgesehen ist, dessen jeweiliger Messwertbereich durch korrespondierende eingeprägte Gleichstromwerte des Schleifenstroms (i) in einem Bereich von 4 mA bis 20 mA abbildbar ist.

9. Messumformer zum Anschließen an eine Zweileiter-Stromschleife (2) mit einem Messwerteingang für einen über die Zweileiter-Stromschleife (2) zu übertragenden Messwert (MW) und mit einem Stromregler (81) zum Einprägen von zum Messwert (MW) korrespondierenden Gleichstromwerten des Schleifenstroms (i) in die Zweileiter-Stromschleife (2), **dadurch gekennzeichnet, dass** der Messumformer zumindest eine in Reihe zum Stromregler (81) geschaltete Busanschalteinheit (1) nach einem der Ansprüche 1 bis 8 aufweist und dass die zumindest eine Busanschalteinheit (1) mit einem Datenbus (5) des Messumformers verbindbar ist.

10. Stellungsregler zum Anschließen an eine Zweileiter-Stromschleife (2) und mit einem Sollwertausgang zur Ausgabe eines über die Zweileiter-Stromschleife (2) in Form eines Stromwertes abgebildeten Sollwertes (SW), wobei der Stellungsregler eine in Reihe zur Zweileiter-Stromschleife (2) geschaltete Strommess-/Energieauskoppeleinheit (91) zur Messung von Gleichstromwerten des Schleifenstroms (i) in der Zweileiter-Stromschleife (2) und zur Energieversorgung eines Stellgliedes (92) des Stellungsreglers aufweist, **dadurch gekennzeichnet,** **dass** der Stellungsregler zumindest eine in Reihe zur Strommess-/Energieauskoppeleinheit (91) geschaltete Busanschalteinheit (1) nach einem der Ansprüche 1 bis 8 aufweist und dass die zumindest eine Busanschalteinheit (1) mit einem Datenbus (5) des Stellungsreglers verbindbar ist.

**11.** Analoge Eingabebaugruppe für einen Leitstellenrechner (100), welche eine Strommess-/Energieversorgungseinheit (101) zur Erfassung eines über eine Zweileiter-Stromschleife (2) übertragenen Messwertes (MW) und zur Energieversorgung eines angeschlossenen Messumformers (8) aufweist, **dadurch gekennzeichnet, dass** die analoge Eingabebaugruppe zumindest eine in Reihe zur Strommess-/Energieversorgungseinheit (101) geschaltete Busanschalteinheit (1) nach einem der Ansprüche 1 bis 8 aufweist und dass die zumindest eine Busanschalteinheit (1) mit dem Datenbus (5) des Leitstellenrechners (100) verbindbar ist.

**12.** Analoge Ausgabebaugruppe für einen Leitstellenrechner (100), welche eine regelbare Stromquelle (111) zum Einprägen eines über eine Zweileiter-Stromschleife (2) zu übertragenden Sollwertes (SW) und zur Energieversorgung eines Stellungsreglers (9) aufweist, **dadurch gekennzeichnet, dass** die analoge Ausgabebaugruppe zumindest eine in Reihe zur regelbaren Stromquelle (111) geschaltete Busanschalteinheit (1) nach einem der Ansprüche 1 bis 8 aufweist und dass die zumindest eine Busanschalteinheit (1) mit dem Datenbus (5) des Leitstellenrechners (100) verbindbar ist.

**Claims**

**1.** Bus power-on unit for interconnecting in a dual conductor current loop (2), wherein the bus power-on unit has a transformer (3) for potential-free decoupling of an alternating current signal (AC) modulated with digital receive data (RD) and/or for coupling an alternating current signal (AC) to be modulated with digital send data (SD), wherein the alternating current signal (AC) is modulated up or can be modulated up to a direct current signal (DC) of a dual conductor loop current (i) and wherein the bus power-on unit has a bidirectional modem unit (4) connected on the secondary side to the transformer (3) for outputting the receive data (RD) to a data bus (5) and for inputting the send data (SD) from the data bus (5), **characterised in that**

- the transformer (3) has at least two primary windings (31, 32) which are interconnected such that the magnetic fields generated in the transformer (3) by the dual conductor loop current (i) flowing through mutually cancel each other out and,
- a low-pass filter (6) and/or a high-pass filter (7) for the alternating current signal (AC) is connected upstream of at least one of the primary windings (31, 32).

**2.** Bus power-on unit according to claim 1, **characterised in that** the low-pass filter (6) is a restrictor.

**3.** Bus power-on unit according to claim 1, **characterised in that** a resistor (71, 72) is connected upstream in each case of the at least two primary windings (31, 32) and that a capacitor (73) is connected in parallel to one of the resistors (72) and forms, with the resistor (72) connected in parallel, the high-pass filter (7).

**4.** Bus power-on unit according to claim 3, **characterised in that** the impedance of the two resistors (71, 72) is a multiple of the impedance of the capacitor (73).

**5.** Bus power-on unit according to one of the preceding claims, **characterised in that** the alternating current signal (AC) has a current amplitude of max. 1 mA, in particular of approx. 0.8 mA.

**6.** Bus power-on unit according to one of the preceding claims, **characterised in that** the alternating current signal (AC) has an FSK frequency of 1200 Hz or 2200 Hz corresponding to the dual value of the digital receive or send data (RD, SD).

**7.** Bus power-on unit according to claim 5 or 6, **characterised in that** the bidirectional data transfer is based on a protocol of a HART standard.

**8.** Bus power-on unit according to one of the preceding claims, **characterised in that** the dual conductor current loop (2) is provided for transmitting a measured value (MW) or a desired value (SW), whose respective measured value range can be mapped by corresponding impressed direct current values of the loop current (i) in a range of between 4 mA and 20 mA.

**9.** Measuring transducer for connection to a dual conductor current loop (2) with a measured value input for a measured value (MW) to be transmitted via the dual conductor current loop (2) and with a current regulator (81) for impressing direct current values of the loop current (i) corresponding to the measured value (MW) into the dual conductor current loop (2), **characterised in that** the measuring transducer has at least one bus power-on unit (1) according to one of claims 1 to 8 connected in series to the current regulator (81) and that the at least one bus power-on unit (1) can be connected to a data bus (5) of the measuring transducer.

10. Position regulator for connection to a dual conductor loop (2) and having a desired value output for outputting a desired value (SW) mapped via the dual conductor current loop (2) in the form of a current value, wherein the position regulator has a current measurement/energy decoupling unit (91) connected in series to the dual conductor current loop (2) for measuring direct current values of the loop current (i) in the dual conductor current loop (2) and for supplying energy to an actuator (92) of the position regulator,

**characterised in that**

the position regulator has at least one bus power-on unit (1) according to one of claims 1 to 8 connected in series to the current measurement/energy decoupling unit (91) and that the at least one bus power-on unit (1) can be connected to a data bus (5) of the position regulator.

11. Analogue input module for a control centre computer (100), which has a current measurement/energy supply unit (101) for capturing a measured value (MW) transmitted via a dual conductor current loop (2) and for supplying energy to a connected measuring transducer (8),

**characterised in that**

the analogue input module has at least one bus power-on unit (1) according to one of claims 1 to 8 connected in series to the current measurement/energy supply unit (101) and that the at least one bus power-on unit (1) can be connected to the data bus (5) of the control centre computer (100).

12. Analogue output module for a control centre computer (100), which has an adjustable current source (111) for impressing a desired value (SW) to be transmitted via a dual conductor current loop (2) and for supplying energy to an actuator (9), **characterised in that**

the analogue output module has at least one bus power-on unit (1) according to one of claims 1 to 8 connected in series to the adjustable current source (111) and that the at least one bus power-on unit (1) can be connected to the data bus (5) of the control centre computer (100).

**Revendications**

1. Unité de raccordement de bus destinée à être intercalée dans une boucle ( 2 ) de courant à deux conducteurs, l'unité de raccordement de bus comportant un transformateur ( 3 ) pour la sortie sans potentiel d'un signal ( AC ) en courant alternatif modulé par des données ( RD ) numériques de réception et/ou pour lancer un signal ( AC ) en courant alternatif à moduler par des données ( SD ) numérique d'émission, le signal ( AC ) en courant alternatif étant appliqué ou pouvant être appliqué en modulation à un signal ( DC ) en courant continu d'un courant ( i ) de boucle à deux conducteurs et l'unité de raccordement de bus comportant une unité ( 4 ) de modem bidirectionnelle reliée du côté secondaire au transformateur ( 3 ) et destinée à sortir les données ( RD ) de réception sur un bus ( 5 ) de données et à entrer les données ( SD ) d'émission du bus ( 5 ) de données, **caractérisée**

- **en ce que** le transformateur ( 3 ) a au moins deux enroulements ( 31, 32 ) primaires qui sont câblés entre-eux de manière à ce que les champs magnétiques, produits dans le transformateur ( 3 ) par le courant ( i ) de boucle à deux conducteurs qui y passe, se compensent mutuellement et,
- **en ce qu'**un filtre ( 6 ) passe-bas et/ou un filtre ( 7 ) passe-haut pour le signal ( AC ) en courant alternatif est monté en amont d'au moins l'un des enroulements ( 31, 32 ) primaires.

2. Unité de raccordement de bus suivant la revendication 1, **caractérisée**
**en ce que** le filtre ( 6 ) passe-bas est une bobine de self.

3. Unité de raccordement de bus suivant la revendication 1, **caractérisée**
**en ce qu'**une résistance ( R1, R2 ) est montée respectivement en amont des au moins deux enroulements ( 31, 32 ) primaires et en ce qu'en parallèle à l'une des résistances ( R2 ) est monté un condensateur ( 73 ) qui forme le filtre ( 7 ) passe-haut avec la résistance ( 72 ) montée en parallèle.

4. Unité de raccordement de bus suivant la revendication 3, **caractérisée**
**en ce que** l'impédance des deux résistances ( 71, 72 ) représente un multiple de l'impédance du condensateur ( 73 ).

5. Unité de raccordement de bus suivant l'une des revendications précédentes, **caractérisée**
**en ce que** le signal ( AC ) en courant alternatif a une amplitude de courant de 1mA au maximum, notamment d'environ 0,8 mA.

6. Unité de raccordement de bus suivant l'une des revendications précédentes, **caractérisée**
**en ce que** le signal ( AC ) en courant alternatif a une fréquence FSK de 1200 Hz ou de 2200 Hz conformément à la valeur duale des données ( RD, SD ) numériques de réception ou d'émission.

7. Unité de raccordement de bus suivant la revendication 5 ou 6, **caractérisée**

**en ce que** la transmission bidirectionnelle de données repose sur un programme d'une norme HART.

8. Unité de raccordement de bus suivant l'une des revendications précédentes, **caractérisée**

**en ce que** la boucle ( 2 ) de courant à deux conducteurs est prévue pour la transmission d'une valeur ( MW ) de mesure ou d'une valeur ( SW ) de consigne, dont la plage respective de valeur de mesure peut être reproduite dans une plage de 4 mA à 20 mA par des valeurs correspondantes injectées en courant continu du courant ( i ) de boucle.

9. Convertisseur de mesure destiné à être raccordé à une boucle ( 2 ) de courant à deux conducteurs, comprenant une entrée de valeur de mesure pour une valeur ( MW ) de mesure à transmettre par la boucle ( 2 ) de courant à deux conducteurs et un régulateur ( 81 ) de courant pour injecter dans la boucle ( 2 ) de courant à deux conducteurs, des valeurs en courant continu de la boucle ( i ) de courant, qui correspondent à la valeur ( MW ) de mesure, **caractérisé en ce que** le convertisseur de mesure comporte au moins une unité ( 1 ) de raccordement de bus suivant l'une des revendications 1 à 8, montée en série avec le régulateur ( 81 ) de courant et **en ce que** la au moins une unité ( 1 ) de raccordement de bus peut être reliée à un bus ( 5 ) de données du convertisseur de mesure.

10. Positionneur destiné à être raccordé à une boucle ( 2 ) de courant à deux conducteurs et comprenant une sortie de valeur de consigne pour sortir une valeur ( SW ) de consigne reproduite sous la forme d'une valeur de courant par la boucle ( 2 ) de courant à deux conducteurs, le positionneur ayant une unité ( 91 ) de mesure d'énergie/sortie d'énergie, montée en série avec la boucle ( 2 ) de courant à deux conducteurs et destiné à mesurer des valeurs en courant continu du courant ( i ) de boucle dans la boucle ( 2 ) de courant à deux conducteurs et à alimenter en énergie un actionneur ( 92 ) du positionneur, **caractérisé**

**en ce que** le positionneur comporte au moins une unité ( 1 ) de raccordement de bus suivant l'une des revendications 1 à 8, montée en série avec l'unité ( 91 ) de mesure du courant/sortie d'énergie et en ce que la au moins une unité ( 1 ) de raccordement de bus peut être reliée à un bus ( 5 ) de données du positionneur.

11. Module analogique d'entrée pour un ordinateur ( 100 ) de poste de pilotage qui comporte une unité ( 101 ) de mesure du courant/alimentation en énergie pour la détection d'une valeur de mesure transmise par une boucle ( 2 ) de courant à deux conducteurs et pour l'alimentation en énergie d'un convertisseur ( 8 ) de mesure raccordé à l'alimentation en énergie, **caractérisé**

**en ce que** le module analogique d'entrée comporte une unité ( 1 ) de raccordement de bus suivant l'une des revendications 1 à 8, montée en série avec l'unité ( 101 ) de mesure de courant/alimentation en énergie et en ce que la au moins une unité ( 1 ) de raccordement de bus peut être reliée au bus ( 5 ) de données de l'ordinateur ( 100 ) du poste de pilotage.

12. Module analogique d'entrée pour un ordinateur ( 100 ) de poste de pilotage, qui comporte une source ( 101 ) de courant réglable pour entrer une valeur ( SW ) de consigne à transmettre par une boucle ( 2 ) de courant à deux conducteurs et pour l'alimentation en énergie d'un positionneur ( 9 ), **caractérisé**

**en ce que** le module analogique de sortie comporte au moins une unité ( 1 ) de raccordement de bus suivant l'une des revendications 1 à 8, montée en série avec la source ( 111 ) de courant réglable et en ce que la au moins une unité ( 1 ) de raccordement de bus peut être reliée au bus ( 5 ) de données de l'ordinateur ( 100 ) du poste de pilotage.

FIG 1

FIG 2

FIG 3

FIG 4

FIG 5